# EUROPÄISCHE PATENTANMELDUNG

(11) **EP 3 618 232 A1**
(43) Veröffentlichungstag der Anmeldung: **04.03.2020**
(21) Anmeldenummer: 18191803.8
(22) Anmeldetag: 30.08.2018
(51) Int. Cl.: H02K 1/26, H02K 15/00, H02K 15/02, H02K 1/27, H02K 17/16

(54) **ELEKTRISCHE MASCHINE, VERFAHREN ZUR HERSTELLUNG EINER ELEKTRISCHEN MASCHINE UND ELEKTRISCHES FAHRZEUG**

(71) Anmelder: Siemens Aktiengesellschaft, 80333 München (DE)
(72) Erfinder: Buschbeck, Jörg, 90482 Nürnberg (DE); Rieger, Gotthard, 80636 München (DE); Schuh, Carsten, 85598 Baldham (DE); Soller, Thomas, 94469 Deggendorf (DE); Vollmer, Rolf, 36129 Gersfeld (DE)

(57) **Zusammenfassung**

Die elektrische Maschine umfasst einen um eine axiale Richtung drehbeweglichen Rotor, welcher zumindest einen Schlitz für mindestens ein magnetisches Felderzeugungsmittel des Rotors aufweist, wobei der Schlitz in einer Ebene quer zur axialen Richtung betrachtet ein Aspektverhältnis von mindestens 5 aufweist.

Bei dem Verfahren zur Herstellung einer elektrischen Maschine werden die Bleche 3D-gedruckt und in axialer Richtung gestapelt.

Das elektrische Fahrzeug ist insbesondere ein hybridelektrisches Luftfahrzeug und weist solch eine elektrische Maschine und/oder eine nach einem solchen Verfahren hergestellte elektrische Maschine auf.

## Beschreibung

Die Erfindung betrifft eine elektrische Maschine, ein Verfahren zur Herstellung einer elektrischen Maschine sowie ein elektrisches Fahrzeug.

Insbesondere im industriellen Bereich sowie im Bereich der elektrischen Mobilität werden leistungsstarke elektrische Maschinen benötigt. Die erzielbare elektrische Leistung einer elektrischen Maschine hängt linear von der Drehzahl eines Rotors der elektrischen Maschine sowie vom Drehmoment M der elektrischen Maschine ab.

Häufig ist die maximale Drehzahl der elektrischen Maschine infolge der bei hohen Drehzahlen auftretenden hohen Zentrifugalkräfte durch die zulässige mechanische Spannungsbeanspruchung der Rotorkonstruktion limitiert. Denn die Tangentialzugspannung an einem Ort des Rotors verhält sich proportional sowohl zum Quadrat der Drehzahl als auch zum Quadrat des Abstands des Orts zur Rotationsachse des Rotors.

Bei elektrischen Maschinen weist der Rotor im Außenbereich, d.h. bezüglich der Rotationsachse des Rotors der elektrischen Maschine in einem radial außenliegenden Bereich, Ausnehmungen auf, welche zur Aufnahme von Felderzeugungsmitteln der elektrischen Maschine, etwa Spulen oder Permanentmagnete, ausgebildet sind. Gerade im Außenbereich jedoch weist der Rotor gemäß den zuvor genannten Zusammenhängen die höchsten Tangentialszugpannungen auf. Folglich treten die höchsten Spannungsbeanspruchungen im Bereich dieser Ausnehmungen auf. Dabei können Kerbeffekte die Materialbeanspruchung weiter erhöhen.

Folglich sind die mechanischen Eigenschaften des Rotormaterials im Bereich der Ausnehmungen ein begrenzender Faktor für die maximale Drehzahl und damit die Leistung von elektrischen Maschinen.

Es ist daher Aufgabe der Erfindung, eine verbesserte elektrische Maschine zu schaffen, welche eine höhere elektrische Leistung erlaubt. Ferner ist es Aufgabe der Erfindung, ein Verfahren zur Herstellung einer solchen elektrischen Maschine sowie ein elektrisches Fahrzeug zu schaffen, welches mit einer hohen elektrischen Leistung betreibbar ist.

Diese Aufgabe der Erfindung wird mit einer elektrischen Maschine mit den in Anspruch 1 angegebenen Merkmalen und mit einem Verfahren zur Herstellung einer elektrischen Maschine mit den in Anspruch 13 angegebenen Merkmalen sowie mit einem elektrischen Fahrzeug mit den in Anspruch 15 angegebenen Merkmalen gelöst. Bevorzugte Weiterbildungen der Erfindung sind in den zugehörigen Unteransprüchen, in der nachfolgenden Beschreibung und in der Zeichnung angegeben.

Die erfindungsgemäße elektrische Maschine umfasst mindestens einen um eine axiale Richtung drehbeweglichen Rotor, welcher zumindest einen Schlitz für mindestens ein magnetisches Felderzeugungsmittel des Rotors aufweist. Bei der erfindungsgemäßen elektrischen Maschine weist dieser zumindest einen Schlitz in einer Ebene quer zur axialen Richtung betrachtet ein Aspektverhältnis von mindestens 4 auf. Vorzugsweise umfasst bei der erfindungsgemäßen elektrischen Maschine der Rotor mehrere Schlitze oder mehrere Gruppen von Schlitzen, wobei die Schlitze oder Gruppen umfänglich, vorzugsweise gleichabständig, verteilt am Rotor angeordnet sind.

Aufgrund der Ausnehmungen in Gestalt von Schlitzen können die auftretenden Tangentialzugspannungen erheblich reduziert werden. Denn erfindungsgemäß ist der Rotor der erfindungsgemäßen elektrischen Maschine nicht aus solchen aus dem Stand der Technik bekannten einzelnen Rotorblechen gebildet, welche gestanzt oder gelasert werden und welche rechteckige oder ovale oder offene Ausnehmungen für Felderzeugungsmittel aufweisen.

Stattdessen weist der Rotor der erfindungsgemäßen elektrischen Maschine Schlitze mit entsprechend geänderten mechanischen Eigenschaften auf: die offenen Ausnehmungen werden durch Schlitze mit einem entsprechenden Aspektverhältnis, d.h. durch vergleichsweise schmale Schlitze, ersetzt. Aufgrund der Schlitze werden die auftretenden Materialspannungen, insbesondere die auftretenden Tangentialzugspannungen, über die zur Verfügung stehende Fläche des Rotors verteilt und gezielt in weniger stark belastete Bereiche des Rotors oder ggf. des Rotorblechs abgeleitet. Insbesondere können nachteilige Kerbeffekte an den Ausnehmungen, wie sie aus dem Stand der Technik bekannt sind, vermieden werden.

Infoge der Änderung der Ausnehmungen des Rotors für Felderzeugungsmittel lassen sich folglich im Betrieb der elektrischen Maschine höhere Drehzahlen des Rotors der elektrischen Maschine und folglich eine höhere elektrische Leistung der elektrischen Maschine erreichen.

Infolge der kleineren Ausnehmungen ergibt sich zusätzlich eine reduzierte Drehmomentwelligkeit und eine geringere Geräuschentwicklung beim Betrieb der erfindungsgemäßen elektrischen Maschine. Vorteilhaft ist die elektrische Maschine ein Motor und/oder ein Generator.

Zweckmäßig ist bei der erfindungsgemäßen elektrischen Maschine das Aspektverhältnis mindestens 8, vorzugsweise mindestens 16.

In einer bevorzugten Weiterbildung der erfindungsgemäßen elektrischne Maschine weist der zumindest eine Schlitz eine linienförmige Gestalt auf. Es versteht sich, dass ein Schlitz im Sinne dieser Erfindung auch eine verzweigte Gestalt annehmen kann.

Vorzugsweise weist bei der erfindungsgemäßen elektrischen Maschine der zumindest einen Schlitz eine I-förmige Gestalt und/oder eine S-förmige Gestalt und/oder eine T-förmige Gestalt und/oder eine H-förmige Gestalt auf. Im Rahmen dieser Erfindung kann eine I-förmige Gestalt auch eine Gestalt eines Serifen aufweisenden "I"s bedeuten.

Bevorzugt ist bei der erfindungsgemäßen elektrischen Maschine der Rotor mittels in axialer Richtung abfolgend angeordneter Bleche gebildet. Elektrischer Maschinen mit Rotoren, welche aus einer in axialer Richtung abfolgenden Anordnung von Blechen gebildet sind, sind an sich bekannt. Insoweit kann die bekannte Technologie grundsätzlich auch auf die erfindungsgemäße elektrische Maschine übertragen werden.

Bei der erfindungsgemäßen elektrischen Maschine sind die Bleche bevorzugt 3D-Druckteile.

Gerade bei 3D-Druckteilen lassen sich die erfindungsgemäß vorgesehenen Schlitze besonders einfach und kostengünstig während der Fertigung vorsehen. Zusätzliche Fertigungsschritte wie etwa ein nachträgliches Stanzen oder ein nachträgliches Lasern der Bleche ist erfindungsgemäß nicht erforderlich.

Die erfindungsgemäße elektrische Maschine ist in dieser Weiterbildung der Erfindung besonders wirtschaftlich fertigbar, da Stanz- und Druckgießwerkzeuge entbehrlich sind, sodass die Fertigungskosten erheblich reduziert werden können. Insbesondere können erfindungsgemäße elektrische Maschinen in geringer Stückzahl wirtschaftlich gefertigt werden. Vorteilhaft lassen sich in dieser Weiterbildung der Erfindung auch Einzellösungen mit besonderer kundenspezifischer Anpassung wirtschaftlich fertigen.

Bei der elektrischen Maschine gemäß der Erfindung sind die Bleche zweckmäßig mit zumindest einem ersten, vorzugsweise weichmagnetischen, Material gebildet.

Aufgrund des weichmagnetischen Materials kann der Rotor der elektrischen Maschine magnetisch flussleitend ausgebildet sein. Auf diese Weise kann der Rotor einen mittels in den Schlitzen befindlichen Felderzeugungsmittels bestehenden magnetischen Fluss besonders effizient zum Luftspalt leiten, sodass die erfindungsgemäße elektrische Maschine besonders effizient und leistungsstark betreibbar ist. Grundsätzlich kann das erste Material auch räumlich strukturiert sein, sodass insbesondere radial relativ zu den Ausnehmungen innenliegende Bereiche des Rotors mit einem weiteren, amagnetischen, Material gebildet sind. In dieser Weiterbildung der Erfindung sind magnetische Kurzschlüsse vorteilhaft wirksam ausgeschlossen.

Vorzugsweise sind bei der erfindungsgemäßen elektrischen Maschine die Bleche mit einem zweiten, elektrisch leitfähigen, Material gebildet. Auf diese Weise kann ein Felderzeugungsmittel in der Art von Spulen eines Elektromagneten in die Schlitze eingebracht sein.

In einer vorteilhaften Weiterbildung der Erfindung bildet bei der elektrischen Maschine das zweite elektrische Material, zumindest einen Teil, der mindestens einen magnetischen Felderzeugungsmittel.

Die elektrische Maschine gemäß der Erfindung ist bevorzugt eine Asynchronmaschine, wobei das mindestens eine magnetische Felderzeugungsmittel mit einem axial führenden elektrischen Leiter gebildet ist.

Alternativ und ebenfalls bevorzugt ist die erfindungsgemäße elektrische Maschine eine Synchronmaschine, wobei das mindestens eine magnetische Felderzeugungsmittel eine Spule, insbesondere eine Flachspule, des Rotors bildet.

Vorteilhaft bildet die elektrische Maschine gemäß der Erfindung einen Motor und/oder Generator.

Zweckmäßig werden die Bleche bei dem erfindungsgemäßen Verfahren mit den Schlitzen versehen und idealerweise mit den Schlitzen 3D-gedruckt.

Besonders bevorzugt werden bei dem erfindungsgemäßen Verfahren die Bleche mit dem in die Schlitze eingebrachten Felderzeugungsmitteln 3D-gedruckt, d.h. auch die Felderzeugungsmittel werden schichtweise 3D-gedruckt und gemeinsam mit den Blechen in axialer Richtung aufeinanderfolgend angeordnet. Geeigneterweise werden durch gemeinsame Stapelung der Bleche mit den Schichten somit zugleich der Rotor als auch das oder die in die Schlitze eingebrachte/n Felderzeugungsmittel gefertigt.

Vorzugsweise werden einzelne Bleche derart zu einem Stapel geschichtet, dass die einzelnen Bleche bis auf den Bereich der Schlitze gegeneinander elektrisch isoliert sind und die Schlitze entlang einer Geraden oder in einer um eine Rotationsachse des Rotors tordierten Position zueinander angeordnet sind. Zweckmäßig kann das in den Schlitzen befindliche Material jeweils benachbarter Bleche in einem thermischen Prozess miteinander verbunden werden. Auf diese Weise lassen sich Felderzeugungsmittel besonders leicht fertigen.

Das erfindungsgemäße elektrische Fahrzeug ist insbesondere ein elektrisches oder hybrid-elektrisches Luftfahrzeug und weist eine erfindungsgemäße elektrische Maschine wie zuvor beschrieben und/oder eine erfindungsgemäß hergestellte elektrische Maschine wie zuvor beschreiben auf.

Nachfolgend wird die Erfindung anhand eines in der Zeichnung dargestellten Ausführungsbeispiels näher erläutert. Es zeigen:
- Fig. 1: ein nach einem bekannten Verfahren gefertigter herkömmlicher Rotor einer elektrischen Maschine schematisch in einer Draufsicht,
- Fig. 2: eine Einzelheit des Rotors gem. Fig. 1 mit einer Ausnehmung sowie einen Vergleich mit Ausnehmungen von Rotoren mehrerer erfindungsgemäß hergestellter erfindungsgemäßer elektrischen Maschinen schematisch in einer Draufsicht,
- Fig. 3: den Rotor einer der erfindungsgemäß hergestellten erfindungsgemäßen elektrischen Maschinen schematisch in einer Draufsicht,
- Fig. 4: den Rotor der erfindungsgemäßen elektrischen Maschine gem. Fig. 3 schematisch in einer Seitenansicht, sowie
- Fig. 5: ein erfindungsgemäßes elektrisches Flugzeug mit einer erfindungsgemäß hergestellten erfindungsgemäßen elektrischen Maschine mit einem Rotor gemäß Fig. 3.

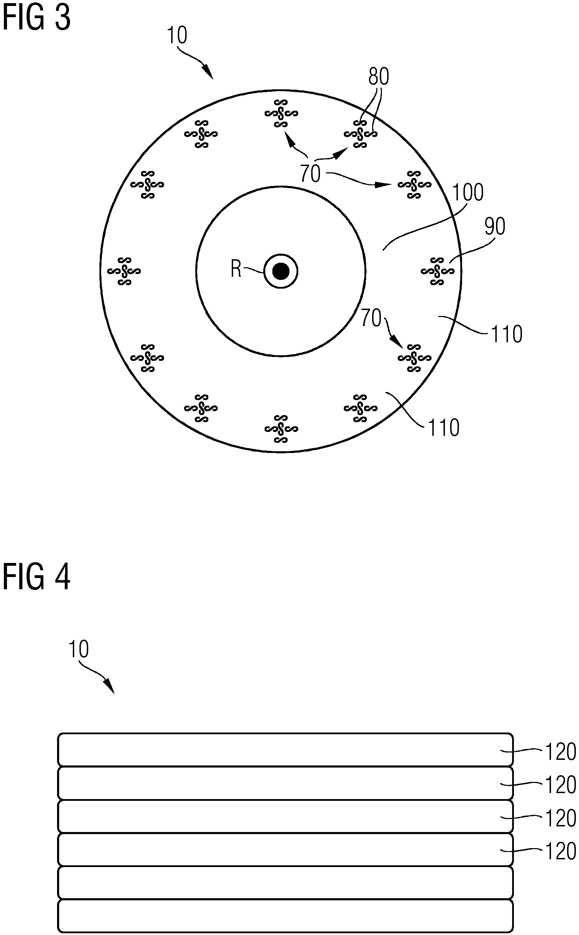

Der in Fig. 3 dargestellte Rotor 10 ist ein Rotor 10 einer erfindungsgemäßen elektrischen Maschine in Gestalt eines Elektromotors 20 (Fig. 4) eines erfindungsgemäßen hybridelektrischen Flugzeugs 400. An die Stelle des hybridelektrischen Flugzeugs tritt in weiteren, nicht eigens dargestellten Ausführungsbeispielen ein sonstiges elektrisches Land-, Wasser- oder Luftfahrzeug. In weiteren, nicht eigens dargestellten Ausführungsbeispielen, welche im Übrigen den beschriebenen Ausführungsbeispielen entsprechen, ist die elektrische Maschine kein Elektromotor 20, sondern ein Generator.

Der in Fig. 3 dargestellte Rotor 10 weist eine Rotationsachse R auf, um welche sich der Rotor 10 im Betrieb dreht. Der Rotor 10 des erfindungsgemäßen Elektromotors 20 weist Ausnehmungen 30 zur Aufnahme von Felderzeugungsmitteln, im dargestellten Ausführungsbeispiel Leiterschleifen zur Erzeugung eines Magnetfelds in Gestalt bestrombarer Kupferspulen auf.

Mittels dieser Felderzeugungsmittel koppelt der Rotor 10 magnetisch mit einem Stator (nicht explizit dargestellt) des Elektromotors 20.

In weiteren Ausführungsbeispielen sind die Ausnehmungen 30 zur Aufnahme von Permanentmagneten oder zur Aufnahme von Käfigstäben eines Käfigläufers ausgebildet.

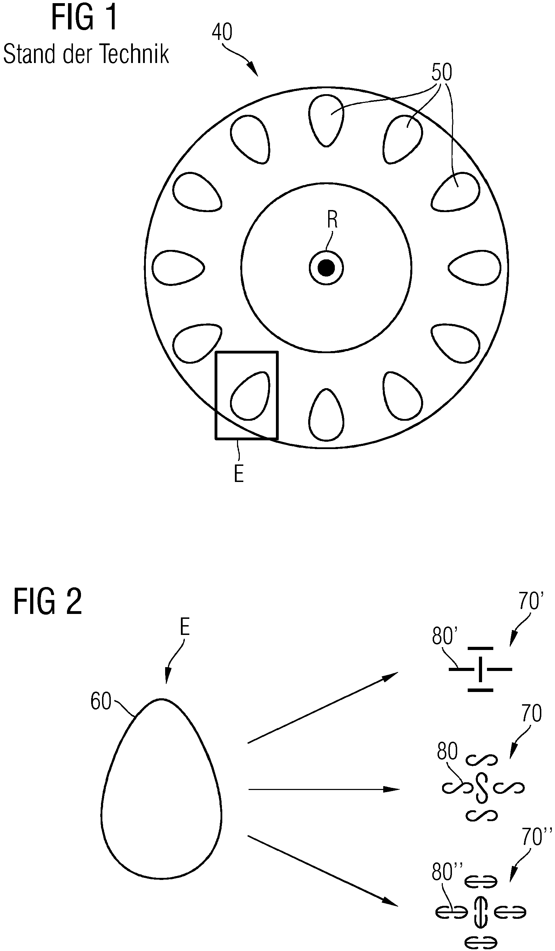

Hinsichtlich der Ausnehmungen 30 unterscheidet sich der Rotor 10 des erfindungsgemäßen Elektromotors 20 von einem aus dem Stand der Technik (kurz: "SdT") bekannten, konventionellen Rotor 40 wie er in Fig. 1 abgebildet ist: Der in Fig. 1 dargestellte konventionelle Rotor 40 weist Ausnehmungen 50 auf, welche wie in der Einzelheit E der Fig. 2 gezeigt oval, d.h. mit einer ei-förmigen Querschnittskontur 60, begrenzt sind. Die ovale Ausnehmung weist in Zeichenebene ein Aspektverhältnis, d.h. ein Verhältnis von Länge zu Breite, von 1.6 auf. Bei weiteren typischen und nicht eigens dargestellten elektrischen Maschinen sind die Ausnehmungen rechteckig ausgebildet und weisen ein Aspektverhältnis zwischen 1 und 2 auf.

Der Rotor 10 des erfindungsgemäßen Elektromotors 20 hingegen weist Ausnehmungen 30 auf, welche anstelle einer ovalen Ausnehmung 50 jeweils eine Gruppe 70 mit mehreren Schlitzen 80 zur Aufnahme von Kupferspulen umfasst. In weiteren, nicht eigens dargestellten Ausführungsbeispielen sind andere Felderzeugungsmittel, etwa Stäbe von Käfigläufern oder Permanentmagnete, vorgesehen.

Die Schlitze 80 weisen in einer Ebene senkrecht zur Rotationsrichtung R des Rotors, d.h. in Zeichenebene, betrachtet ein Aspektverhältnis von mindestens 5 auf, d.h. der Schlitz 80 erstreckt sich jeweils entlang einer Länge, welche die jeweilige Breite des Schlitzes jeweils um einen Faktor von zumindest 5 übersteigt. Im dargestellten Ausführungsbeispiel übersteigt das Aspektverhältnis den Wert 16.

Es versteht sich, dass unter dem Begriff Aspektverhältnis im Rahmen der vorliegenden Erfindung nicht ein Aspektverhältnis einer den oder die Schlitze 80 umhüllenden geometrischen Figur handelt, sondern es geht die tatsächlich dem Verlauf des Schlitzes folgende Länge dieses Schlitzes in den Quotienten aus Länge zu Breite des Schlitzes, welcher das Aspektverhältnis des Schlitzes bildet, ein. Es versteht sich ferner, dass unter der Breite jeweils die geringste Breite des Schlitzes zu verstehen ist. Insbesondere bemisst sich die Breite des Schlitzes außerhalb von ggf. in den einzelnen nachfolgend beschriebenen Ausführungsbeispielen vorhandenen Verzweigungsstellen. In allen nachfolgend beschriebenen Ausführungsbeispielen ist das Aspektverhältnis jeweils 20.

Im in Figur 3 dargestellten Ausführungsbeispiel verlaufen die Schlitze 80 jeweils S-förmig. Die Schlitze 80 sind dabei in Gruppen 70 von jeweils fünf Schlitzen angeordnet. Von vieren dieser Schlitze 80 einer Gruppe 70 ist jeweils einer der Schlitze 80 jeweils an einem äußeren Stegende eines gedachten Kreuzes angeordnet, sodass die Orientierung S-Form jedes dieser vier Schlitze 80 einer umfänglich um die Rotationsachse R des Rotors 10 herum verlaufenden Leserichtung entspricht. Ein fünfter Schlitz 80 ist an einer Stegkreuzung des gedachten Kreuzes angeordnet und um 90 Grad gegenüber den übrigen vier Schlitzen 80 verdreht.

In einem weiteren Ausführungsbeispiel des erfindungsgemäßen Elektromotors 20 weist der Rotor 10 anstelle von Gruppen 70 S-förmiger Schlitze 80 Gruppen 70' I-förmiger Schlitze 80' (s. Fig. 2) auf. Die I-förmigen Schlitze 80' weisen keinen kurvigen, gekrümmten Verlauf, sondern jeweils einen Verlauf entlang einer geraden Strecke auf. Auch die I-förmigen Schlitze sind in Gruppen 70' angeordnet, in welchen von vier Schlitzen 80' je ein Schlitz 80' an je einem äußeren Stegende eines gedachten Kreuzes angeordnet ist, sodass die Orientierung der I-Form jedes dieser vier Schlitze 80' einer umfänglich um die Rotationsachse R des Rotors 10 herum verlaufenden Leserichtung entspricht. Ein fünfter Schlitz 80' ist um 90 Grad gegenüber den übrigen vier Schlitzen 80 verdreht an einer Stegkreuzung des gedachten Kreuzes angeordnet.

In einem weiteren Ausführungsbeispiel des erfindungsgemäßen Elektromotors 20 weisen die Schlitze 80" eine sich in Serifen verzweigende I-Form auf. Dabei verzweigt sich ein Balken der I-Form an seinen Längsenden in zwei serifenartige, sich senkrecht zur Längserstreckung des Balkens der I-Form fortstreckende Verzweigungen, welche einen derart um den Balken der I-Form gebogenen Verlauf einnehmen, dass sich die Enden der Verzweigungen parallel zum Balken der I-Form erstrecken. Auch die Schlitze 80" mit sich in Serifen verzweigender I-Form sind wie in den vorgenannten Ausführungsbeispielen in Gruppen 70" angeordnet.

Der Rotor 10 des erfindungsgemäßen Elektromotors 20 ist im relativ zu den Schlitzen 80 radial außenliegenden Bereich 90 mit einem ersten, weichmagnetischen Material gebildet, im gezeigten Ausführungsbeispiel aus Kobalt-Eisen-Legierungen, welche den magnetischen Fluss eines in den Schlitzen 80 befindlichen Felderzeugungsmittels leiten und zum Luftspalt führen kann.

In einem relativ zu dem Schlitzen 80 radial innenliegenden Bereich 100 sowie in zwischen den Gruppen 70 liegenden Bereichen 110 ist der Rotor 10 mit einem nichtmagnetischen Werkstoff, vorliegend einem Verbundwerkstoff, gebildet.

Erfindungsgemäß ist der Rotor 10 des erfindungsgemäßen Elektromotors 20 wie in Fig. 4 dargestellt mittels Rotorblechen 120 hergestellt: Dazu wird der Rotor 10 wie an sich bekannt aus einzelnen Rotorblechen 120 gefertigt, welche Flachteile bilden, deren flächige Erstreckungen senkrecht zur Rotationsachse R des Rotors 10 verlaufen. Im Unterschied zum Stand der Technik allerdings werden die Rotorbleche 120 des erfindungsgemäßen Elektromotors 20 jedoch nicht gelasert oder gestanzt, sondern 3D-gedruckt. Dabei werden beim 3D-Druck zugleich sowohl die Schlitze 80 jeweils in die einzelnen Rotorbleche 120 eingebracht als auch die Schichten der Flussleitmittel gemeinsam mit dem Rotorblech 3D-gedruckt. Die Flussleitmittel sind im gezeigten Ausführungsbeispiel mit Kupferspulen gebildet, welche zur Erzeugung eines magnetischen Flusses bestrombar sind.

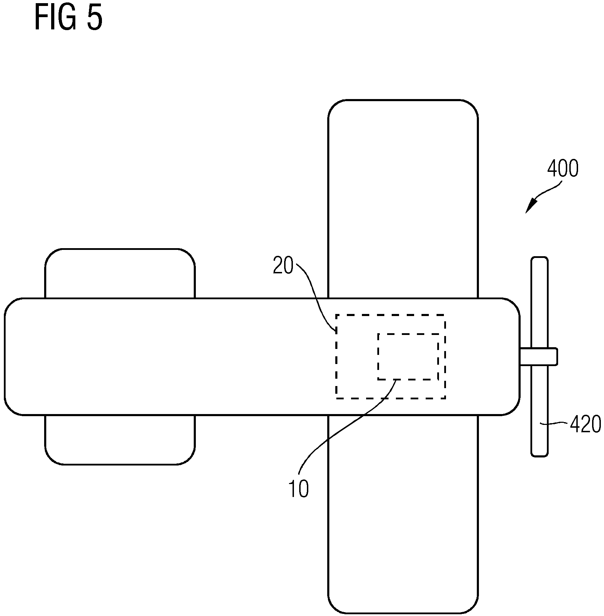

Das in Fig. 5 dargestellte hybridelektrische Flugzeug 400 weist den erfindungsgemäßen Elektromotor 20 mit dem Rotor 10 zum Antrieb eines Propellers 420 auf.

## Patentansprüche

1. Elektrische Maschine mit einem um eine axiale Richtung drehbeweglichen Rotor (10), welcher zumindest einen Schlitz (80; 80'; 80") für mindestens ein oder mit mindestens einem Magnetfelderzeugungsmittel des Rotors aufweist, wobei der Schlitz (80; 80"; 80") in einer Ebene quer zur axialen Richtung betrachtet ein Aspektverhältnis von mindestens 5 aufweist.

2. Elektrische Maschine nach Anspruch 1 mit einem Aspektverhältnis von mindestens 4, vorzugsweise mindestens 8, idealerweise mindestens 16.

3. Elektrische Maschine nach einem der vorhergehenden Ansprüche, bei welcher der zumindest eine Schlitz (80; 80"; 80") eine linienförmige Gestalt aufweist.

4. Elektrische Maschine nach dem vorhergehenden Anspruch, bei welcher der Schlitz (80; 80'; 80") eine I-förmige Gestalt (80') und/oder eine S-förmige Gestalt (80) und/oder eine T-förmige Gestalt und/oder eine H-förmige Gestalt (80") aufweist.

5. Elektrische Maschine nach einem der vorhergehenden Ansprüche, umfassend mindestens ein oder mehrere Flussleitmittel, welche/r in den zumindest einen Schlitz (80; 80'; 80") eingebracht ist oder sind.

6. Elektrische Maschine nach einem der vorhergehenden Ansprüche, insbesondere nach Anspruch 5, bei welcher der Rotor (10), vorzugsweise einschließlich in den Schlitzen (80; 80'; 80") eingebrachter Flussleitmittel, mittels in axialer Richtung (R) aufeinanderfolgender Bleche (120) gebildet ist.

7. Elektrische Maschine nach einem der vorhergehenden Ansprüche, bei welcher die Bleche (120) 3D-Druckteile sind.

8. Elektrische Maschine nach einem der vorhergehenden Ansprüche, bei welcher die Bleche (120) mit einem ersten, weichmagnetischen, Material gebildet sind und/oder mit einem zweiten, elektrisch leitfähigen, Material gebildet sind.

9. Elektrische Maschine nach einem der vorhergehenden Ansprüche, bei welcher das zweite elektrische Material, zumindest einen Teil, der mindestens einen magnetischen Felderzeugungsmittels bildet.

10. Elektrische Maschine nach einem der vorhergehenden Ansprüche, welche eine Asynchronmaschine ist, wobei das mindestens eine magnetische Felderzeugungsmittel mit einem axial führenden elektrischen Leiter gebildet ist.

11. Elektrische Maschine nach einem der vorhergehenden Ansprüche, welche eine Synchronmaschine ist, wobei das mindestens eine magnetische Felderzeugungsmittel eine Spule, insbesondere eine Flachspule, des Rotors bildet.

12. Elektrische Maschine nach einem der vorhergehenden Ansprüche, welche einen Motor (20) und/oder Generator bildet.

13. Verfahren zur Herstellung einer elektrischen Maschine (20) nach einem der vorhergehenden Ansprüche, bei welchem die Bleche (120) 3D-gedruckt werden und in axialer Richtung aufeinanderfolgend einen Rotor (10) bildend angeordnet werden.

14. Verfahren nach dem vorhergehenden Anspruch, bei welchem die Bleche einschließlich in den Schlitzen (80;80';80'') eingebrachter Flussleitmittel 3D-gedruckt werden.

15. Elektrisches Fahrzeug, insbesondere hybridelektrisches Luftfahrzeug, mit einer elektrischen Maschine (20) nach einem der Ansprüche 1 bis 12 und/oder hergestellt nach einem Verfahren nach einem der Ansprüche 13 und 14.
